# DEMANDE DE BREVET EUROPEEN

(11) **EP 2 876 213 A1**
(43) Date de publication de la demande: **27.05.2015**
(21) Numéro de dépôt: 14194206.0
(22) Date de dépôt: 20.11.2014
(51) Int. Cl.: E02B 5/02, E02B 3/12

(54) **Machine autopropulsée de coulage de béton en continu**

(30) Priorité: 21.11.2013 FR 1361450
(71) Demandeur: Agilis, 84250 Le Thor (FR)
(72) Inventeur: Dorangeon, Philippe, 95520 Osny (FR); Berger, Christian, 26270 Loriol/Drôme (FR)
(74) Mandataire: Delorme, Nicolas

(57) **Abrégé**

L'application concerne une machine (1) autopropulsée pour étaler du béton dans un fossé comprenant un châssis (10), auquel est rattaché au moins une chenille centrale (22), supportant une trémie (13) à béton et un module de propulsion (12) ; de plus la machine (1) comprend également une cinématique de liaison (30) qui relie au châssis (10), au moins deux chenilles latérales (23) situées de part et d'autres de la chenille centrale (22), et permettant une mobilité entre une position de support dans laquelle le plan de roulage de toutes les chenilles est sensiblement le même et une position de travail dans laquelle au moins le plan de roulage de l'une des chenilles latérales (23) est distinct du plan de roulage de la chenille centrale (22).

## Description

La présente invention concerne une machine autopropulsée pour le bétonnage en continu, d'ouvrages en bord de voies ferrées, de routes et d'autoroutes.

Afin de garantir un bon écoulement des eaux de pluie, il est souvent nécessaire de construire des fossés, des caniveaux, des murets le long des voies ferrées, des routes et des autoroutes. Certains de ces ouvrages sont ensuite bétonnés afin de faciliter la circulation des eaux ainsi que pour éviter qu'ils ne soient envahis par la végétation et endommagés par les eaux de pluies.
Il existe dans l'art antérieur des machines destinées à de tels travaux. On distingue dans les machines actuelles, l'utilisation de deux technologies distinctes. Le premier modèle de conception propose des machines qui enjambent le fossé et qui, au moyen de roues ou de chenilles, prennent appui et roulent de part et d'autre de la tranchée. Ces machines nécessite donc, d'aménager un passage de chaque coté du fossé à creuser. Suivant la topographie de la zone des travaux il peut être très difficile d'effectuer les travaux d'aménagements de ces passages, en les maintenant parallèle quel que soit le dénivelé et l'agencement de chacun des bords du fossé. En outre, si ces machines peuvent être très opérationnelles en terrain plat et dégagé, leur utilisation se révèle des plus ardue en terrain à forte pente et difficile d'accès.
Le deuxième type de machine proposé par l'art antérieur, notamment dans le brevet WO 90/02227, est une machine sur chenilles, roulant directement au fond du fossé et prenant appui sur les bords de ce dernier grâce à des patins de direction. Cette machine est propulsée par l'avant, répand le béton par l'arrière et ne nécessite pas de travaux complémentaires à l'excavation du fossé. Cependant l'usage de patins de direction exige que les parois du fossé aient une portance suffisante et que le fossé ne subisse aucun virage serré ni rétrécissement de section. En effet, dans le cas contraire, les patins de directions se plantent dans les parois du fossé, ce qui bloque la machine, endommage la paroi du fossé et créé une surépaisseur locale de béton au fond du fossé le temps que la machine soit arrêtée. Outre le retard qu'ils engendrent, ces incidents peuvent se révéler très couteux car il faut alors désengager la machine de l'entaille créée dans la paroi du fossé, réparer la dite paroi et enlever la surcouche de béton ayant coulée alors que la machine était à l'arrêt.

Dans ce contexte technique, la présente invention à pour but d'éviter ces problèmes en perfectionnant les machines de l'art antérieur.

La machine autopropulsée pour couler du béton dans un fossé, ou réaliser des ouvrages de maçonnerie tels que des caniveaux, des murets ou des bordures, selon l'invention comprend un châssis, auquel est rattaché au moins une chenille centrale, qui supporte une trémie à béton et un module de propulsion. Cette machine comprend en outre une cinématique de liaison qui relie au châssis, au moins deux chenilles latérales situées de part et d'autres de la chenille centrale. La cinématique de liaison permet une mobilité entre une position de support dans laquelle le plan de roulage de toutes les chenilles est sensiblement le même et une position de travail dans laquelle au moins le plan de roulage de l'une des chenilles latérales est distinct du plan de roulage de la chenille centrale. Ainsi la machine suivant l'invention peut avancer en prenant appui sur trois plans distinct et peut donc travailler dans un fossé en prenant appui, pour progresser, sur le fond et les parois latérales dudit fossé, tout en exerçant une pression modérée sur les parois. En effet la machine selon l'invention est capable d'appliquer une pression limitée à 10 mégapascals répartis sous toute la surface des chenilles. Ce qui évite ainsi à la machine de s'embourber et d'endommager le fossé. Par ailleurs, la possibilité d'alterner une position de roulage sur route à une position de travail en fossé, rend la machine suivant l'invention très polyvalente et autonome.

Dans le présent document on définit par plan de roulage, le plan sur lequel s'appuient les moyens de propulsion de type roues ou chenilles.

Selon une caractéristique de l'invention, la cinématique de liaison permet un déplacement rotatif d'au moins une des chenilles latérale. De la sorte, il est possible pour la machine de travailler en prenant appui sur des plans de roulage inclinés les uns par rapport aux autres.

Selon une autre caractéristique de l'invention, la cinématique de liaison permet un déplacement vertical d'au moins une des chenilles latérale. De la sorte il est possible pour la machine de travailler en prenant appui sur des plans de roulage n'étant pas à la même hauteur.

Avantageusement, il est possible de combiner les déplacements rotatifs et verticaux des chenilles latérales. Cette combinaison de déplacements permet à la machine de travailler dans une grande variété de fossés en pouvant ainsi s'adapter au mieux à leur topographie.

Dans une forme de réalisation préférée, la cinématique de liaison de la machine suivant l'invention comprend, au moins deux berceaux mobiles, positionnés de part et d'autre de la chenille centrale, et au moins un vérin de déplacement rotatif. Chaque berceau est relié au châssis par une liaison pivot et supporte une chenille latérale. Une extrémité du vérin est liée en rotation à chaque berceau mobile et l'autre extrémité est fixée en liaison pivot au châssis. Ainsi en commandant le vérin de déplacement rotatif, il est possible de faire varier précisément la position angulaire du plan de roulage des chenilles laterales. Il est ainsi possible pour la machine de travailler dans des fossés ayant des configurations angulaires différentes.

La cinématique de liaison de la machine suivant l'invention comporte également au moins un vérin de déplacement vertical et au moins une biellette fixés en liaison pivot au berceau mobile par l'une de leurs deux extrémités et fixés en rotation à une chenille par leur autre extrémité. L'utilisation conjointe du vérin de déplacement vertical et de la biellette, liés ensemble à la chenille, permet d'assurer avec précision le déplacement vertical de ladite chenille en fonction de la topographie du terrain. Ainsi en associant, le déplacement rotatif au déplacement vertical, des chenilles latérales, il est possible pour la machine de travailler dans tous types de fossés, quelque soit la largeur de la bande centrale et l'inclinaison des parois.

Avantageusement, le berceau mobile est aussi lié en pivot à une biellette fixée en rotation à une broche manuelle, laquelle broche est fixée par une liaison pivot au châssis. Cette liaison utilisant une broche manuelle permet d'interdire la rotation des chenilles latérales tant que la broche n'a pas été actionnée par un opérateur. C'est un élément de sécurité essentiel lors de la circulation sur une surface sensiblement plane comme une route ou le chemin d'accès à un chantier.

Dans un mode de réalisation préférentiel, la machine suivant l'invention comprend des vérins de calage destinés à la stabiliser lors du déplacement des plans de roulage des chenilles. L'utilisation de ces moyens de calages embarquée empêche toute instabilité de la machine et permet de faire passer la machine en position de travail sans qu'il soit nécessaire d'utiliser des cales extérieures. La machine suivant l'invention est ainsi autonome lors de son passage en position de travail.

D'autres caractéristiques et avantages de l'invention se dégageront de la description qui va suivre en regard des dessins annexés qui représentent une forme de réalisation de l'invention.
La figure 1 montre une vue de coté de la machine suivant l'invention.
La figure 2 montre une vue de derrière, en coupe selon A-A de la figure 1.
Les figures 3 et 4 montrent des vues détaillées de la cinématique de liaison suivant l'invention.
Les figures 5, 6 et 7 montrent des vues de derrière, en coupe selon A-A de la figure 1, de la machine dans différentes positions de travail.
La figure 8 montre une vue de derrière, en coupe selon A-A de la figure 1, de la machine réalisant différents ouvrages de maçonnerie tels que des caniveaux ou des murets.

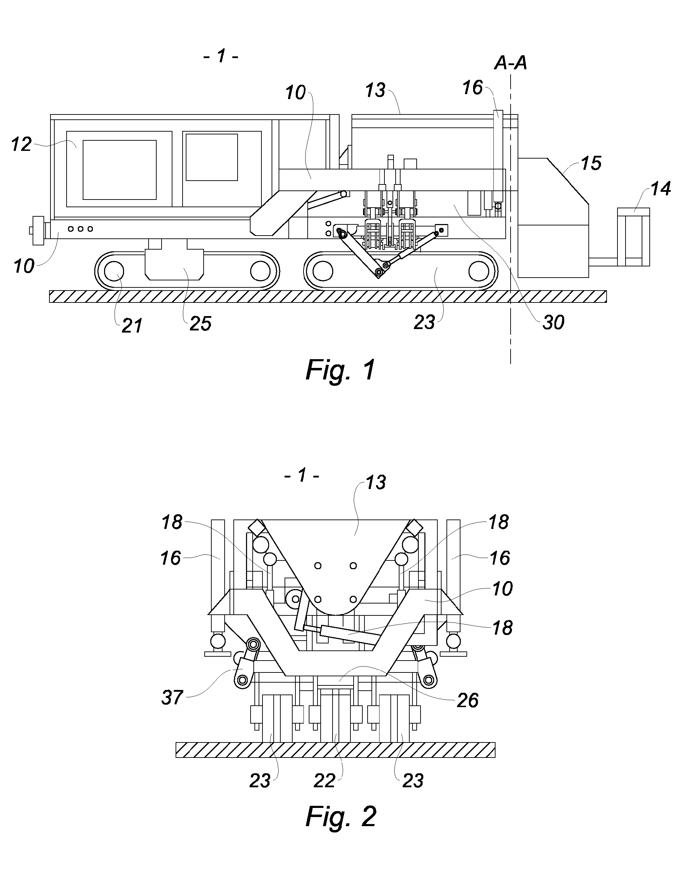

La description qui va suivre est faite dans le référentiel X, Y, Z par rapport auquel les termes, avant, arrière, haut, bas, longitudinal et transversal, sont définis.
La présente invention concerne une machine autopropulsée pour le bétonnage en continu 1 visible de coté sur la figure 1. Cette machine 1, se compose d'un châssis 10 qui peut être un assemblage de poutres mécano-soudés, d'un groupe de propulsion 12, d'une trémie à béton 13, d'un poste de pilotage 14, de moyens de propulsion et d'une cinématique de liaison qui porte la référence globale 30.

La trémie 13 est un contenant ayant sensiblement une forme prismatique triangulaire à base rectangulaire. L'une des faces rectangulaire de la trémie 13 est laissée évidée pour pouvoir introduire le béton liquide. En outre, l'une des deux extrémités triangulaire de la trémie est ouverte pour pouvoir répandre le béton. L'autre extrémité est laissée obstruée.
Dans le mode de réalisation décrit sur les figures, la trémie 13 a une contenance indicative de l'ordre de sept cents litres et comprend un dispositif de pompage du béton par vis d'Archimède.

Le châssis 10 peut comporter notamment deux longerons et un support rehaussé adapté à la forme de la trémie 13 à béton.
Ce châssis 10 supporte, dans la partie avant de la machine 1, le groupe de propulsion 12. Ce groupe de propulsion 12 peut être, entre autre, composé d'un moteur diesel, de pompes hydraulique et d'un automate de pilotage.
La partie rehaussée du châssis 10 accueille la trémie à béton 13 et les deux vérins de calages 16.

De plus, à l'arrière de la machine 1, le poste de pilotage 14 est fixé au châssis 10.
Il est, par ailleurs possible d'accrocher, à l'extrémité ouverte de la trémie 13, un moule 15 pour la mise en forme du béton.

En outre, comme visible sur les figures 2, 5, 6 et 7, la trémie à béton 13 est liée au châssis 10 par trois vérins d'élévation 18. Comme visible dans l'exemple de réalisation présenté en figure 2, préférentiellement deux vérins 18 sont disposés à la vertical à proximité de l'extrémité ouverte de la trémie 13. Un troisième vérin 18 est disposé, à l'opposé des deux précédents vérins 18, à proximité de l'extrémité obstruée de la trémie 13. Ces vérins 18 sont pilotés par un ensemble de deux codeurs et un automate, de cette manière il est possible d'obtenir un nivellement transversal de la trémie. Un quatrième vérin 18 situé sous la trémie 13, permet d'orienter ladite trémie 13 par rapport à l'axe longitudinal de la machine 1

Les moyens de propulsion de la machine 1 comprennent une chenille avant 21 directionnelle, une chenille centrale arrière 22 et deux chenilles latérales arrières 23.
La chenille 21 est fixée au châssis 10 par une chape 25. De même la chenille 22 est fixée au châssis 10 par une chape 26 fixe.
Les chenilles 23 sont reliées au châssis 10 par la cinématique de liaison 30.

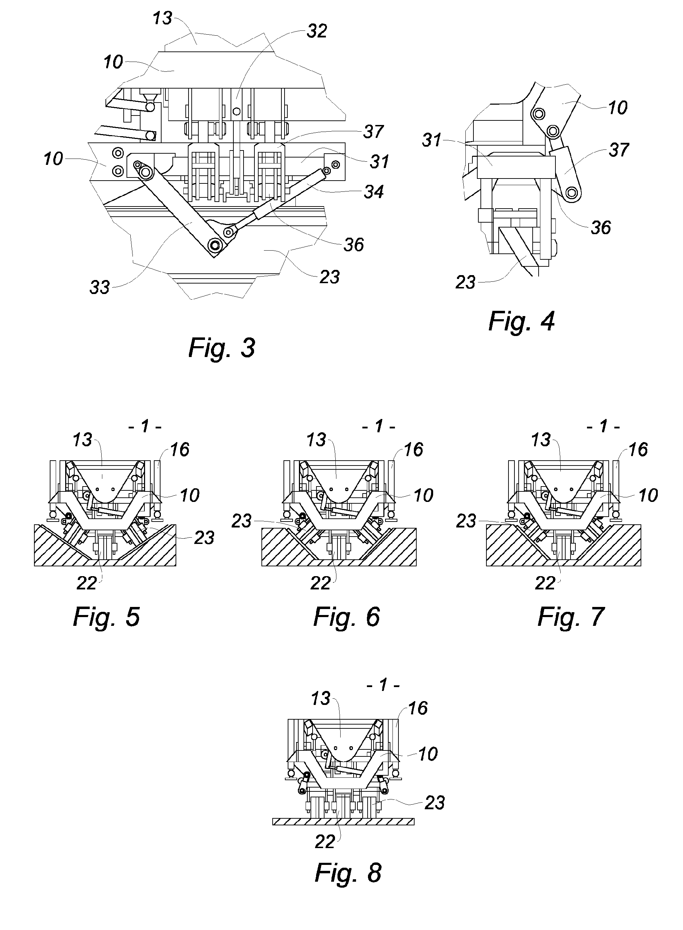

Visible en détail sur les figures 3 et 4, la cinématique de liaison 30 comprend notamment un berceau mobile 31 liée en pivot au châssis 10, et un vérin de déplacement rotatif 32 dont une première extrémité est liée en rotation au châssis 10 et dont la seconde extrémité est fixée par une liaison pivot au berceau mobile 31. Une biellette 33 et un vérin de déplacement vertical 34 sont fixés en liaison pivot au berceau 31, chacun par l'une de leurs deux extrémité et sont liés ensemble en rotation à la chenille 23.

Par ailleurs, la cinématique de liaison 30 comporte un dispositif de sécurité composé d'une biellette 36 et d'une broche manuelle 37. La biellette 36 est montée en liaison pivot à sa première extrémité avec le berceau mobile 31. La seconde extrémité de la biellette 36 est liée en rotation avec la première extrémité de la broche manuelle 37. La seconde extrémité de la broche manuelle 37 est en liaison pivot avec le châssis 10. Dans l'exemple de réalisation présenté, chaque berceau 31 est relié à deux ensembles biellette 36 - broche 37. Cela garantit un blocage optimal du plan de roulage des chenilles 23 lors de la conduite sur routes ou chemins de la machine 1.

Dans le mode de réalisation ici présenté, les vérins 16, 18, 32 et 34 sont des vérins hydrauliques actionnés par pompes hydrauliques, pilotés par un automate et par l'opérateur.

Lors de la circulation sur route de la machine 1, la cinématique de liaison 30 est positionnée de manière à ce que les chenilles 23 soient sensiblement sous le plan de roulage de la chenille 22 ; la machine 1 reposant alors sur trois chenilles. Par sécurité, les broches manuelles 37 sont verrouillées afin d'interdire tous déplacements du plan de roulage des chenilles 23. Pour changer l'orientation des chenilles il est tout d'abord nécessaire qu'un opérateur déverrouille les broches 37, après calage de la machine par les vérins 16. Ensuite il est possible pour l'opérateur d'amorcer l'opération de déplacement des chenilles 23 depuis le poste de pilotage 14 par l'activation de commandes sur un pupitre de commandes.

Une fois que la machine est maintenue en équilibre par les vérins 16, l'automate actionne les vérins de déplacement rotatif 32 et les vérins de déplacement vertical 34.
En étant actionné, le vérin 32 exerce une force sur le berceau mobile 31. Or le berceau mobile 31 est fixé par une liaison pivot au châssis 10. La force exercée par le vérin 32 sur le berceau 31, entraine donc la rotation du berceau 31.
De même, le vérin 34 et la biellette 33 sont liés en rotation au berceau 31. La force exercée par le vérin 34 sur la biellette 33 a donc pour effet de déplacer verticalement le point de liaison unissant ces deux éléments. Ce point de liaison étant aussi fixé à la chenille 23, l'action du vérin 34 a pour effet de déplacer verticalement la chenille 23.
Une fois démarrée cette opération est régulée par l'automate pouvant être situé dans le groupe de propulsion 12.

Ainsi, comme montré sur les figures 5, 6 et 7, en combinant les déplacements rotatifs et verticaux des chenilles 23, la machine 1 peut travailler dans différent type de fossés. Les figures 5 et 6 montrent que la machine 1 peut orienter les chenilles 23 dans différentes positions angulaires. Les figures 6 et 7 montrent qu'en combinant déplacements rotatifs et déplacements verticaux des chenilles 23, la machine 1 peut travailler dans différents profils de fossés ayant des profondeurs différentes

A la fin de l'opération de déplacement des chenilles 23, la machine 1 rétracte ses vérins de calage 16 et peut alors progresser dans la zone de travail et simultanément déposer une couche de béton.

Grâce à la présence des chenilles latérales 23 et de leurs cinématiques de liaisons 30 associées, la machine 1 peut avancer dans des fossés aux configurations topographiques et géologiques variées. En dépit de sa masse et de sa charge de béton la machine 1 ne s'embourbe pas dans les parois du fossé, et ne risque donc pas d'endommager lesdites parois et de bloquer le chantier.

En outre, comme cela est visible sur la figure 8, la machine 1 peut réaliser des ouvrages de maçonnerie tels que des caniveaux ou des murets. Pour ce faire la machine 1 conserve les chenilles 23 en position de circulation sur route, dans le même plan de roulage que la chenille 22. La machine 1 progresse ensuite sensiblement parallèlement à l'ouvrage à réaliser, en déversant le béton nécessaire.

Suivant le mode de réalisation, le guidage de la machine 1 peut notamment être réalisé, manuellement par l'opérateur, par un dispositif de filoguidage, par un dispositif de guidage laser ou par une station locale.

Bien entendu, l'invention n'est pas limitée à la forme de réalisation représentée ci-dessus mais elle embrasse au contraire toute les formes de réalisation y compris les travaux sur sol plan comme notamment la réalisation de murets et de caniveaux

## Revendications

1. Machine (1) autopropulsée pour étaler du béton dans un fossé, ou réaliser des ouvrages de maçonnerie tels que des caniveaux, des murets ou des bordures, comprenant un châssis (10), auquel est rattaché au moins une chenille centrale (22), supportant une trémie (13) à béton et un module de propulsion (12) ; **caractérisée en ce que** la machine (1) comprend en outre une cinématique de liaison (30) qui relie au châssis (10), au moins deux chenilles latérales (23) situées de part et d'autres de la chenille centrale (22), et permettant une mobilité entre une position de support dans laquelle le plan de roulage de toutes les chenilles est sensiblement le même et une position de travail dans laquelle au moins le plan de roulage de l'une des chenilles latérales (23) est distinct du plan de roulage de la chenille centrale (22).

2. Machine (1) suivant la revendication 1, **caractérisée en ce que** la cinématique de liaison (30) permet un déplacement rotatif d'au moins une des chenilles latérales (23).

3. Machine (1) suivant la revendication 1, **caractérisée en ce que** la cinématique de liaison (30) permet un déplacement vertical d'au moins une des chenilles latérales (23).

4. Machine (1) suivant l'une quelconque des revendications 1 à 3, **caractérisée en ce que** la cinématique de liaison (30) assure un déplacement vertical et un déplacement rotatif d'au moins l'une des chenilles latérales (23).

5. Machine (1) suivant la revendication 1 **caractérisée en ce que** la cinématique de liaison (30) comprend, au moins deux berceaux mobiles (31), positionnés de part et d'autre de la chenille centrale (22) chaque berceau (31)est relié au châssis (10) par une liaison pivot et supporte une chenille latérale (23); et au moins un vérin de déplacement rotatif (32), dont une extrémité est liée en rotation à chaque berceau mobile (31) et l'autre extrémité est fixée en liaison pivot au châssis (10).

6. Machine (1) suivant les revendications 1 et 5 **caractérisée en ce que** la cinématique de liaison (30) comporte au moins un vérin de déplacement vertical (34) et au moins une biellette (33) fixés en liaison pivot au berceau mobile (31) par l'une de leurs deux extrémités et fixés en rotation à une chenille latérale (23) par leur autre extrémité.

7. Machine (1) suivant les revendications 1, 5 et 6, **caractérisée en ce que** le berceau mobile (31) est lié en pivot à une biellette (36) fixée en rotation à une broche manuelle (37), laquelle broche (37) est fixée par une liaison pivot au châssis (10).

8. Machine (1) suivant la revendication 1 **caractérisé en ce qu'**elle comprend des vérins (16) de calage destinés à stabiliser la machine (1) lors du déplacement des plans de roulage des chenilles latérales (23).
